# EUROPEAN PATENT SPECIFICATION

(11) **EP 2 833 103 B1**
(45) Date of publication and mention of the grant of the patent: **09.11.2016**
(21) Application number: 14175488.7
(22) Date of filing: 02.07.2014
(51) Int. Cl.: G01D 13/26, B60K 37/02

(54) **Instrument panel with illuminated pointer and trim ring**
Instrumententafel mit beleuchtetem Zeiger und Klemmflansch
Tableau de bord avec pointeur illuminé et anneau de garniture

(30) Priority: 31.07.2013 US 201313955828
(43) Date of publication of application: 04.02.2015
(73) Proprietor: Delphi Technologies, Inc., Troy MI 48007 (US)
(72) Inventor: Blackmer, Stephen C., Millington, MI Michigan 48746 (US); Atherton, Frank J., Goodrich, MI Michigan 48438 (US)
(74) Representative: Delphi France SAS

(56) References cited:
- DE-A1-102009 031 682
- FR-A1- 2 939 885
- GB-A- 2 472 269
- US-A1- 2007 157 745
- US-A1- 2011 182 052
- US-B1- 6 601 532

## Description

### TECHNICAL FIELD

This disclosure generally relates to vehicle instrument panel assemblies, and more particularly relates to an assembly with an illuminated pointer that illuminates a trim ring or light pipe proximate to the tip of the illuminated pointer.

### BACKGROUND OF THE INVENTION

It is known to provide a vehicle instrument panel assembly with a trim ring or light pipe that visually emphasizes the perimeter or sweep path of a movable pointer used to point to indicia on a display surface of the assembly. Such an arrangement is known from US 6 601 532. Typically, the trim ring or light pipe is illuminated by one or more light sources (e.g. LEDs) located behind the display surface. These light sources undesirable occupy locations on a circuit board that is part of the assembly, and undesirably increase the cost of the assembly.

### SUMMARY OF THE INVENTION

Described herein is a vehicle instrument panel assembly that uses an illuminated pointer to project light into a trim ring or light pipe located on a display surface of the assembly, and thereby illuminate the light pipe without having to provide additional light sources to back-light the light pipe.

In accordance with one embodiment, a vehicle instrument panel assembly is provided. The assembly includes a pointer, a light source, and a light pipe. The pointer is movable about an axis to point to indicia on a display surface of the assembly. The pointer defines a shaft portion of the pointer that rotates about the axis. The light source is configured to emit light into the shaft portion to illuminate the pointer. The light pipe is arranged on the display surface and proximate to a sweep path of a tip of the pointer. The pointer is further configured to project light from the light source into the light pipe.

Further features and advantages will appear more clearly on a reading of the following detailed description of the preferred embodiment, which is given by way of non-limiting example only and with reference to the accompanying drawings.

### BRIEF DESCRIPTION OF THE DRAWINGS

The present invention will now be described, by way of example with reference to the accompanying drawings, in which:
Fig. 1 is a perspective view of a vehicle interior equipped with an instrument panel assembly in accordance with one embodiment;
Fig. 2 is an exploded perspective view of the instrument panel of Fig. 1 in accordance with one embodiment;
Fig. 3 is a side view of the instrument panel of Fig. 1 in accordance with one embodiment; and
Fig. 4 is a side view of the instrument panel of Fig. 1 in accordance with one embodiment.

### DESCRIPTION OF THE PREFERRED EMBODIMENT

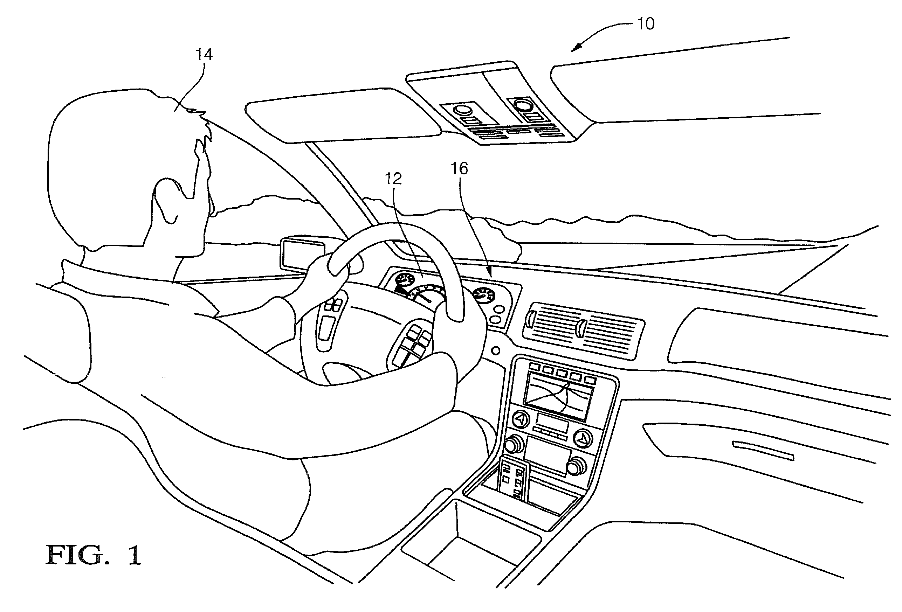

Fig. 1 illustrates a non-limiting example of a vehicle 10 equipped with an instrument panel assembly, hereafter referred to as the assembly 12, installed into a dashboard 16 of the vehicle 10. In general, the assembly 12 displays vehicle information to a human 14 or operator of the vehicle 10 such as vehicle speed, engine coolant temperature, and the like.

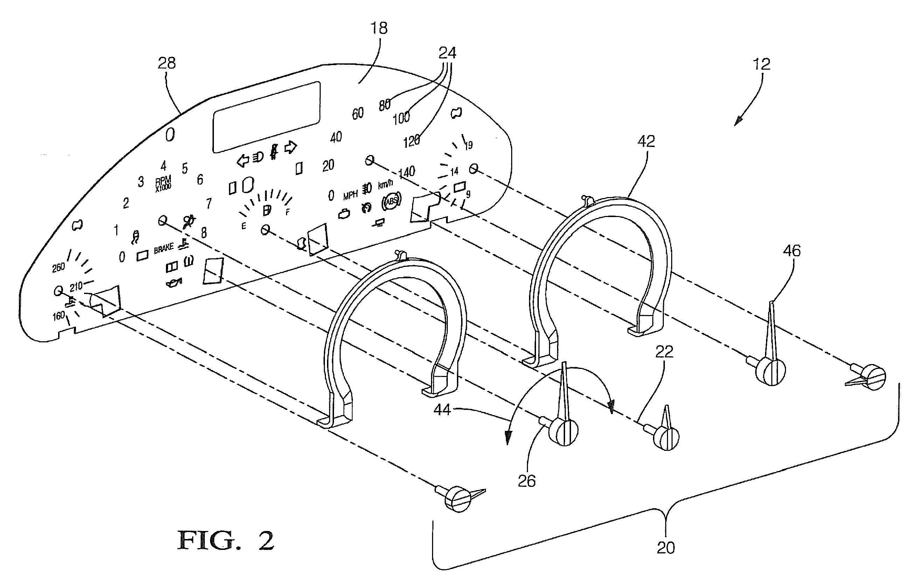

Fig. 2 illustrates a non-limiting example of some of the parts that form the assembly 12 as those parts may appear prior to assembly and not installed into the dashboard 16 of the vehicle 10. In general, the assembly 12 includes an applique 28 that defines a display surface 18 of the assembly 12. In this example the applique 28 spans most of the viewing area of the assembly 12. The applique 28 or the display surface 18 typically includes graphics and indicia that determine the appearance of an instrument panel (the assembly 12). Some of the graphics or indicia 24 may be configured to become visibly apparent to the human 14 only when suitably backlit.

The assembly 12 may also include one or more pointers, hereafter referred to as the pointer 20. In general, the pointer 20 is movable about an axis 22 in a manner effective for the pointer 20 to point to indicia 24 on the display surface 18 of the assembly 12. In order for the pointer 20 to be moveable as described herein, the pointer 20 may include or define a shaft portion 26 of the pointer 20 that rotates about the axis 22.

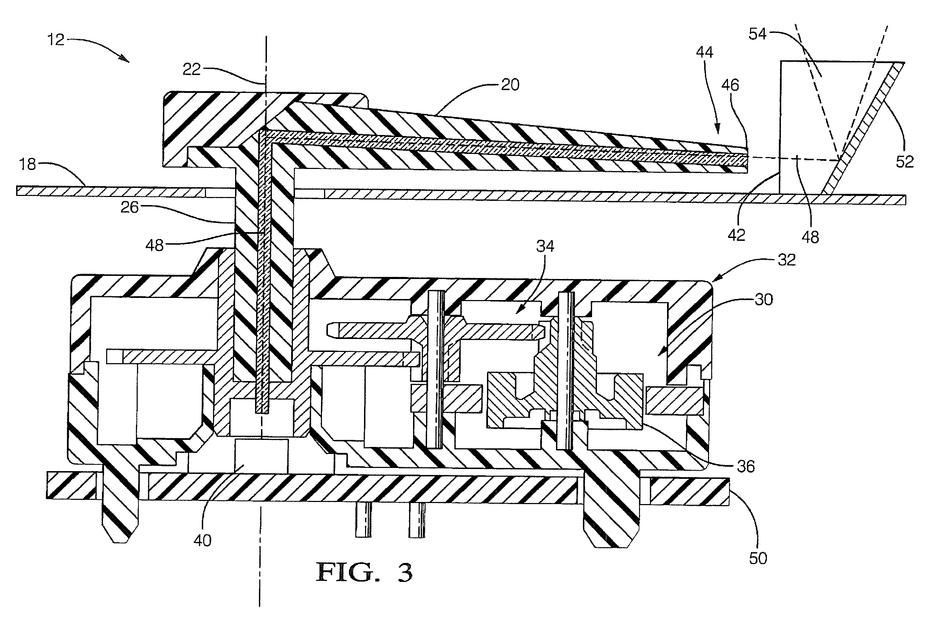

Fig. 3 further illustrates non-limiting features of a portion of the assembly 12 after the parts described above, and other parts, are assembled to form the assembly 12. By way of example and not limitation, the assembly may include a stepper motor 30 in this example is part of a motor assembly 32 that may include a reduction gear arrangement 34 that couples the stepper motor 30 to the pointer 20 such that a plurality of rotations by a rotor 36 of the stepper motor 30, one-hundred (100) rotations or revolutions for example, is necessary to move the pointer 20 through a range of motion, two-hundred-forty degrees (240°) of angle for example. As such, the stepper motor 30 is coupled to the pointer 20 via a reduction gear arrangement 34.

The assembly 12 may also include a light source 40 configured to emit light into the shaft portion 26 to illuminate the pointer 20. By way of example and not limitation, the light source may preferably be a light emitting diode (LED) as LEDs are generally considered to be reliable and inexpensive compared to other light sources such as an incandescent bulb.

The assembly 12 may also include a trim ring or light pipe 42 arranged on the display surface 18 and proximate to a sweep path 44 of a tip 46 of the pointer 20. The terms 'trim ring' and 'light pipe' may be used herein interchangeably as 'trim ring' describes the part in accordance with its appearance, and 'light pipe' describes the part in accordance with its function. The sweep path 44 is used herein to generally describe a line or arc, or arced area of the display surface 18 that is swept by the tip 46. The light pipe 42 is preferably formed of a generally transparent, possibly tinted material such as a polymeric compound.

The pointer 20 is also generally configured to project or propagate the light 48 from the light source 40 into the light pipe 42. In general, the light pipe 42 is configured to distribute the light 48 so that the light pipe 42, along with all or part of the pointer 20, is illuminated by the light 48 emitted by the light source 40. This arrangement is advantageous because the hue (color) of light emitted by the pointer 20 and the light pipe 42 (i.e. the trim ring) are well matched because the light 48 emitted by both originates from the same light source (the light source 40). This overcomes prior problems with pointers and trim rings being illuminated with separate distinct light sources that did not have well matched hues of light. This arrangement is also advantageous as the limited and expensive space of a circuit board 50 that is part of the assembly 12 is not unnecessarily wasted by accommodating multiple light sources.

In the non-limiting example shown in Fig. 3, the light pipe 42 is located outside of the sweep path 44. For this arrangement, the light 48 propagates from the pointer 20 to the light pipe 42 in a generally straight line that is generally perpendicular to the discretion that the human 14 views the assembly 12. As such, evidence that the pointer 20 is providing light to the light pipe 42 may not be readily apparent to the human 14, which may be preferable. Once the light 48 is inside or within the light pipe 42, the light 48 may be reflected, refracted, diffused, or otherwise manipulated so that the light 48 is generally dispersed throughout the light pipe 42 so the light pipe 42 appears to be as uniformly illuminated as possible. It is contemplated that the light pipe 42 may include various indicia such as tic-marks and/or numbers for aesthetic reasons.

By way of example and not limitation, the light pipe may be configured to define a reflective surface 52 configured to distribute light received from the pointer (i.e. the light 48) throughout the light pipe. For example, the reflected surface 52 may reflect the light 48 to project reflected light 54 toward the human 14. The reflective surface 52 may be formed by adding a reflective coating to the appropriate surfaces of the light pipe 42, as will be recognized by those in the art.

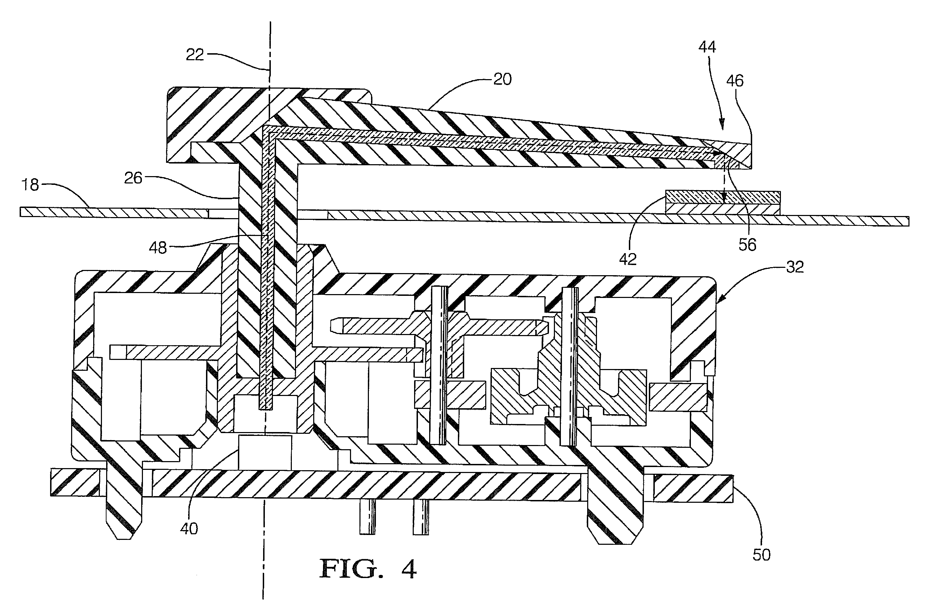

Fig. 4 illustrates an alternative embodiment of the assembly comparable to that shown in Fig. 3, except that the tip 46 and the sweep path 44 defined by the tip 46 generally overlays the light pipe 42. Having the tip 46 overlay the light pipe 42 may be preferred for aesthetic reasons. In order to get the light 48 directed toward or into the light pipe 42, the tip 46 may include a reflective element 56 configured to reflect the light 48 from the pointer 20 toward the light pipe 42. By way of example, the reflective element may be a small mirror formed of glass or polished metal that is insert-molded into the pointer 20 near the tip 46. Alternatively, the tip 46 may include an angled portion corresponding to the illustration of the reflective element 56, with a reflective coating applied to the surface of the angled portion. This arrangement may be preferably for aesthetic reasons.

Accordingly, a vehicle instrument panel assembly 12 is provided that illuminates a light pipe 42 or trim ring arranged to define the perimeter of a gauge type indicator. By illuminating the pointer 20 and the light pipe 42 with light from the same light source, the hue of light emitted by the pointer 20 and the light pipe 42 are easily matched. Also, such an arrangement make more efficient use of circuit board space as it is unnecessary to provide multiple distinct light sources to illuminate both the pointer 20 and the light pipe 42. While the shapes of the light pipe 42 and the pointer 20 illustrated in the examples herein are generally simple, it is recognized that an innumerable number of shapes may be useful to achieve certain light distribution characteristics. For example, the surface of the light pipe 42 that is viewed by the human 14 may be curved to prevent glare/reflection caused by ambient light impinging on the light pipe 42.

While this invention has been described in terms of the preferred embodiments thereof, it is not intended to be so limited, but rather only to the extent set forth in the claims that follow.

## Claims

1. A vehicle instrument panel assembly (12) comprising:
a pointer (20) movable about an axis (22) to point to indicia (24) on a display surface (18) of the assembly (12), wherein the pointer (20) defines a shaft portion (26) of the pointer (20) that rotates about the axis (22);
a light source (40) configured to emit light (48) into the shaft portion (26) to illuminate the pointer (20);
**characterized in that** the assembly further comprises
a light pipe (42) arranged on the display surface (18) and proximate to a sweep path (44) of a tip (46) of the pointer (20), wherein
the pointer (20) is configured to project light (48) from the light source (40) into the light pipe (42).

2. The assembly (12) in accordance with claim 1, wherein the light pipe (42) is configured to define a reflective surface (52) configured to distribute light (48) received from the pointer (20) throughout the light pipe (42).

3. The assembly (12) in accordance with any one of claims 1 to 2, wherein the tip (46) includes a reflective element (56) configured to reflect light (48) from the pointer (20) toward the light pipe (42).

4. The assembly (12) in accordance with any one of claims 1 to 3, wherein the light pipe (42) is outside of the sweep path (44).

5. The assembly (12) in accordance with any one of claims 1 to 3, wherein the tip (46) overlays the light pipe (42).

## Patentansprüche

1. Eine Fahrzeug-Armaturentafel-Anordnung (12), die aufweist:
einen Zeiger (20), der um eine Achse (22) bewegbar ist, um zu Indicia (24) auf einer Anzeigefläche (18) der Anordnung (12) zu zeigen, wobei der Zeiger (20) einen Schaftteil (26) des Zeigers (20) definiert, der um die Achse (22) rotiert;
eine Lichtquelle (40), die konfiguriert ist zum Emittieren von Licht (48) in den Schaftteil (26), um den Zeiger (20) zu illuminieren;
**dadurch gekennzeichnet, dass** die Anordnung weiter aufweist
eine Lichtröhre (42), die auf der Anzeigefläche (18) und in der Nähe eines Bewegungspfads (44) einer Spitze (46) des Zeigers (20) angeordnet ist, wobei
der Zeiger (20) konfiguriert ist zum Projizieren von Licht (48) von der Lichtquelle (40) in die Lichtröhre (42).

2. Die Anordnung (12) gemäß Anspruch 1, wobei die Lichtröhre (42) konfiguriert ist zum Definieren einer reflektierenden Oberfläche (52), die konfiguriert ist zum Verteilen von Licht (48), das von dem Zeiger (20) empfangen wird, in der Lichtröhre (42).

3. Die Anordnung (12) gemäß einem der Ansprüche 1 bis 2, wobei die Spitze (46) ein reflektierendes Element (56) umfasst, das konfiguriert ist zum Reflektieren von Licht (48) von dem Zeiger (20) in Richtung der Lichtröhre (42).

4. Die Anordnung (12) gemäß einem der Ansprüche 1 bis 3, wobei die Lichtröhre (42) außerhalb des Bewegungspfads (44) ist.

5. Die Anordnung (12) gemäß einem der Ansprüche 1 bis 3, wobei die Spitze (46) über der Lichtröhre (42) liegt.

## Revendications

1. Assemblage formant tableau de bord pour véhicule (12) comprenant :
un pointeur (20) déplaçable autour d'un axe (22) pour pointer vers des index (24) sur une surface d'affichage (18) de l'assemblage (12), dans lequel le pointeur (20) définit une portion de tige (26) du pointeur (20) qui tourne autour de l'axe (22) ;
une source de lumière (40) configurée pour émettre de la lumière (48) jusque dans la portion de tige (26) pour illuminer le pointeur (20) ;
**caractérisé en ce que** l'assemblage comprend en outre
un guide de lumière (42) agencé sur la surface d'affichage (18) et à proximité d'un trajet de balayage (44) d'une extrémité (46) du pointeur (20), dans lequel
le pointeur (20) est configuré pour projeter de la lumière (48) depuis la source de lumière (40) jusque dans le guide de lumière (42).

2. Assemblage (12) selon la revendication 1, dans lequel le guide de lumière (42) est configuré pour définir une surface réfléchissante (52) configurée pour distribuer de la lumière (48) reçue depuis le pointeur (20) à travers la totalité du guide de lumière (42).

3. Assemblage (12) selon l'une quelconque des revendications 1 et 2, dans lequel l'extrémité (46) inclut un élément réfléchissant (56) configuré pour réfléchir la lumière (48) provenant du pointeur (20) vers le guide de lumière (42).

4. Assemblage (12) selon l'une quelconque des revendications 1 à 3, dans lequel le guide de lumière (42) est à l'extérieur du trajet de balayage (44).

5. Assemblage (12) selon l'une quelconque des revendications 1 à 3, dans lequel l'extrémité (46) recouvre le guide de lumière (42).
